# EUROPEAN PATENT SPECIFICATION

(11) **EP 3 329 164 B1**
(45) Date of publication and mention of the grant of the patent: **11.09.2019**
(21) Application number: 16763569.7
(22) Date of filing: 26.07.2016
(51) Int. Cl.: F16K 31/163, F15B 15/06

(54) **ACTUATOR FOR VALVES**
STELLANTRIEB FÜR VENTILE
ACTIONNEUR POUR SOUPAPES

(30) Priority: 27.07.2015 IT UB20152515
(43) Date of publication of application: 06.06.2018
(73) Proprietor: Flowserve S.r.l., 20032 Cormano (MI) (IT)
(72) Inventor: PELLINGHELLI, Ferruccio, 20032 Cormano (mi) (IT); PELLINGHELLI, Davide, 20032 Cormano (MI) (IT); CONTARDI, Ivo, 20032 Cormano (MI) (IT)
(74) Representative: Fisauli, Beatrice A. M.
(86) International application number: PCT/IB2016/054440
(87) International publication number: WO 2017/017601

(56) References cited:
- US-A- 5 494 254
- US-B2- 8 087 316

## Description

The invention relates to a valve control actuator and more specifically to a control actuator which can be coupled with a valve. The area of interest is that of shut-off and adjustment valve control in medium to large installations, such as gas and oil pipelines, refineries or the like.

It is known that installations like those mentioned above are provided with shut-off and/or adjustment valves. These valves are usually provided with a remote and/or local control, managed by dedicated actuators, for the opening and closing thereof, in both normal and emergency operating conditions.

The invention specifically relates to valve actuators with a working angle of the shutter of 90°, also known as "quarter turn".

Known actuators typically comprise a lever mechanism, subject to the action of cylinders and coil springs, which sets in rotation the valve shutter from a fully open to a fully closed position, and vice versa, through intermediate positions.

Examples of prior art actuators are for example described in US 3672262 and US 5601110 A.

These actuators are typically connected to the drive shaft of the valve, and more precisely to a portion of said shaft protruding outside the valve enclosure. These actuators typically comprise a pair of fork elements integral with a shaft or a sleeve connectable to said drive shaft portion. At least one rectilinear guide is defined on each fork element in which a sliding cursor is accommodated, typically a sliding block. A thrust element, such as a hydraulic or pneumatic cylinder or a spring cartridge, acts on said sliding block, either directly or by means of a thrust pin, to set the valve shaft in rotation. In detail, the force exerted by the thrust element causes the sliding of the cursors along the guides and thereby the rotation of the sleeve or shaft, which in turn pulls the valve drive shaft in rotation.

These actuators are also known as yoke actuators.

This type of actuators, which are very common, are applicable to small as well as very large valves, such as up to 152,4 cm (60 inches).

As is understandable, as the size of the valve increases, the torque required to rotate the shutter almost always also increases and, consequently, the size of the respective actuators.

If as regards the opening of the valve, this object can be achieved by increasing the size and pressure of the hydraulic cylinder, as regards the closing step, usually managed by springs, there are issues related to the construction limits of the latter.

For example, in order to generate greater torques and thereby higher forces, attempts have been made to intervene by changing the spring wire diameter so as to increase the elastic constant thereof.

This solution, however, was found to be applicable only up to a certain value of the wire diameter since, in addition, as a result of heat treatments, the springs may suffer an excessive surface fragility, especially at low temperatures under to which they may be exposed.

For this reason, the currently adopted practice is to provide the actuator with longer springs so as to have a wider compression deformation with equal elastic constant of the spring.

If this solution in some cases may be satisfactory, it may instead have restrictions where it is necessary to limit the axial dimensions of the actuator.

In these situations, to address the above issues, the use of actuators which in jargon are called "double yoke" is preferred. Examples of such actuators are described in US 8087316 B2 and IT 1384593.

US 8, 087, 316 B2 discloses a control actuator, coupleable with a valve, comprising a shaft, rotatable about an axis of rotation, having an end coupleable with a drive shaft of a valve; a thrust device acting along a direction in a plane perpendicular to the axis of rotation; a conversion device, connected to the shaft adapted to convert the rectilinear motion of the thrust device into a rotary motion of the shaft about the axis of rotation; wherein said conversion device comprises a single or double oscillating yoke, and wherein said thrust device comprises pneumatic cylinders coupled to elastic return elements.

These actuators are provided with a double oscillating yoke in which two oscillating yokes are arranged mirror-like with respect to the axis of rotation of the sleeve.

These actuators are then moved by a pair of cylinders, each connected to one of the two yoke devices.

These known actuators, when sized to provide high torques, for example of from 100,000 Nm up to 500,000 Nm, also exhibit lateral dimensions which reach and sometimes exceed eight meters.

Another type of valve control actuator is disclosed in US 5,494,254. This document discloses a valve control actuator coupled to a valve, said actuator comprising a rotatable shaft, a first actuator device, a first conversion device, a second actuator device and a second conversion device, wherein said conversion devices are arranged consecutively along the axis of rotation of the shaft and said thrust devices comprise hydraulic cylinders.

In this context, the object of the present invention is to provide a valve actuator which overcomes the above drawbacks of the prior art.

Therefore, the object of the present invention is to provide a valve actuator having reduced axial dimensions but at the same time able to provide high torques.

Another object of the present invention is to provide a valve actuator which can adopt medium-sized cylinders and springs able to work properly even with fluids (oil or air) at low pressures.

A further object of the present invention is to provide a valve actuator of simple construction, cost-effective and which can be manufactured with the same components of the prior art actuators.

These and other objects are achieved by a control actuator, couplable with a valve, comprising:
- a shaft, rotatable about an axis of rotation, having an end couplable with a drive shaft of a valve;
- at least a first thrust device acting along a direction in a first plane perpendicular to the axis;
- at least a first conversion device, connected to the shaft, adapted to convert the rectilinear motion of the first thrust device into a rotary motion of said shaft about the axis of rotation;
- at least a second thrust device acting along a direction in a second plane perpendicular to the axis of rotation; and
- at least a second conversion device, connected to the shaft, adapted to convert the rectilinear motion of the second thrust device into a rotary motion of the shaft about the axis of rotation.

Said conversion devices_comprise a single or double oscillating yoke, and said thrust devices comprise pneumatic or hydraulic cylinders, or said cylinders coupled to elastic return elements or are only elastic return elements.

The conversion devices are arranged mutually overlapping and consecutive along the axis of rotation. More precisely, said conversion devices are arranged adjacent to each other along a direction parallel to the axis of rotation and away from the end of the actuator shaft couplable with the valve drive shaft.

In practice, therefore, said conversion devices are connected to the shaft so that the first plane and the second plane, planes in which the action directions of the thrust devices lie, are parallel and also mutually adjacent and consecutive.

In the actuator of the present invention, the thrust devices therefore do not act on a single common plane, as it happens in the prior art actuators, but instead they act on multiple offset planes with respect to the axis of rotation of the shaft.

This allows implementing an actuator with a greater number of thrust devices and, at the same time, with reduced axial and/or lateral dimensions. Therefore, with the present invention, the torque provided for opening or closing the valve can be significantly increased in an extremely compact actuator.

As above mentioned, the thrust devices comprise pneumatic or hydraulic cylinders. Said cylinders are preferably coupled to elastic return elements, such as coil springs or the like, the latter, however, being able to be used also separately as thrust devices.

According to a variant of the invention, the directions of action of the first thrust device and of the second thrust device may be parallel to each other. In practice, the actuator cylinders, the springs or both are arranged along parallel axes.

Alternatively, said directions of action may be perpendicular to each other. This configuration may be useful to further reduce the axial dimensions of the actuator, if required.

According to one aspect of the invention, the actuator may comprise a third thrust device, connected to the first conversion device, acting along a direction in the first plane.

In this variant, preferably, the actuator may also comprise a fourth thrust device connected to the second conversion device, acting along a direction in the second plane.

As above-mentionned, the conversion devices comprise a single oscillating yoke or a double oscillating yoke.

According to the latter variant, and when the actuator comprises two thrust devices for each plane, the thrust devices acting on directions lying in the same plane are connected to the opposite sides of the respective double oscillating yoke.

According to another aspect of the invention, the shaft may have a cylindrical profile and may comprise multiple sections of different diameters at each conversion device. Preferably, said diameter decreases as it moves away from the section closest to the valve drive shaft. In fact, since the torques exerted by the various thrust devices add up towards the shaft portion gradually closer to the valve drive shaft, such sections are subject to a greater effort than the preceding ones.

In one aspect of the invention, the shaft may comprise several mutually joined portions. Preferably, each of said portions is connected to at least one conversion device.

In another aspect of the invention, the actuator may comprise further thrust devices which act on planes parallel and consecutive to the first and the second plane. Said further thrust devices are coupled to further conversion devices connected to the shaft and superimposed along the axis of rotation thereof.

In another aspect of the invention, the actuator may comprise an enclosure which encloses at least part of said shaft and the conversion devices. Preferably, a section of said shaft projects beyond said enclosure to allow the coupling with the valve drive shaft.

Said objects are achieved by a shut-off device which includes:
- a valve comprising a tubular body, in which a passage for a fluid is defined, a shutter placed in said passage and rotatable about an axis of rotation to open and close said passage for the fluid and a drive shaft integral in rotation with the shutter; and
- an actuator, according to any one of the configurations described above, connected to the drive shaft of said valve.

Further features and advantages of the present invention will become more apparent from the description of a preferred but non-exclusive exemplary embodiment of a valve actuator, as shown in the accompanying figures, in which:
- figure 1 is a lateral view of the valve actuator according to an embodiment of the present invention;
- figure 2 is a lateral view of the actuator in figure 1;
- figure 3 is top view of the actuator in figure 1;

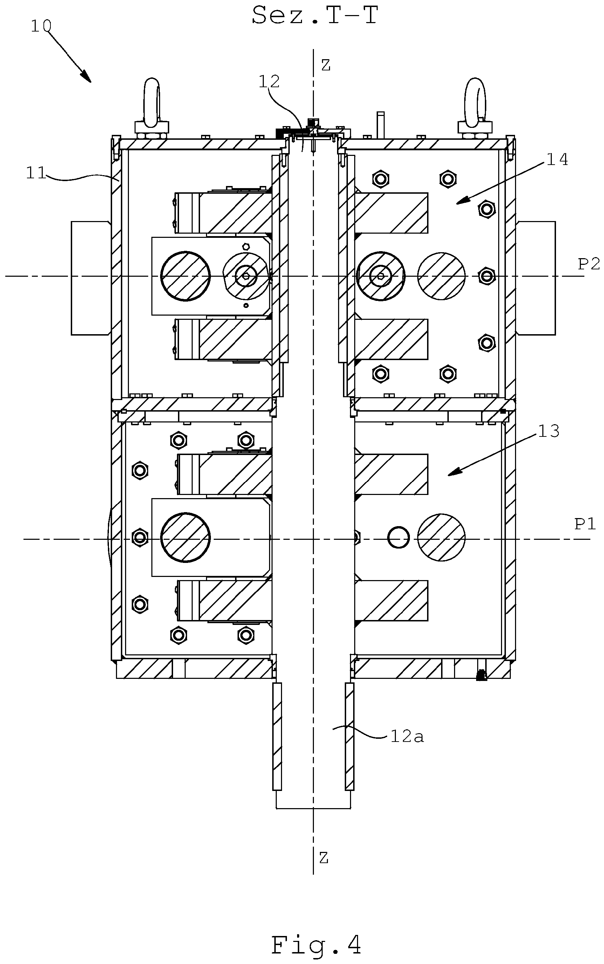

- figure 4 is a sectional view along a transverse vertical plane of the actuator in figure 1;

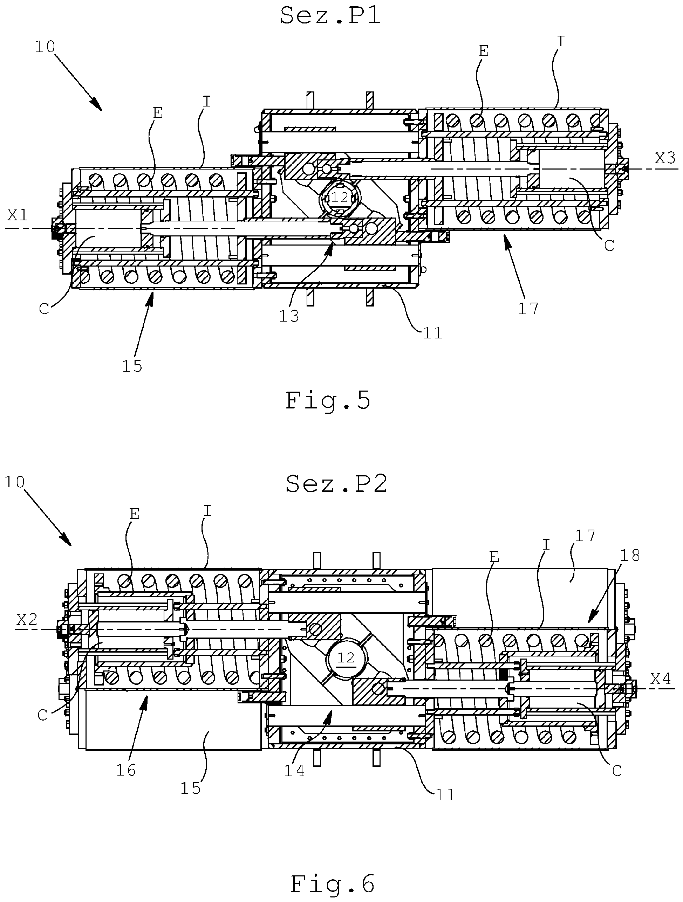

- figure 5 is a sectional view along a first horizontal plane of the actuator in figure 1;
- figure 6 is a sectional view along a second horizontal plane of the actuator in figure 1;
- figure 7 is a simplified perspective view of the valve actuator according to another embodiment of the present invention;
- figure 8 is a lateral view of a shut-off device comprising a valve and an actuator according to the invention.

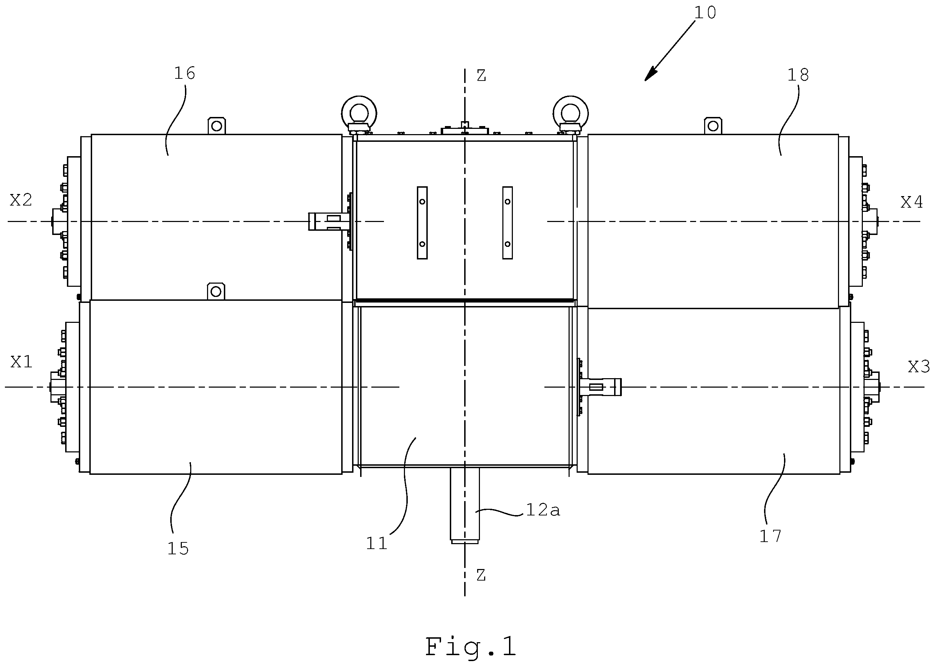

With reference to the accompanying figure 1, a valve actuator is shown, indicated as a whole with reference numeral 10.

The actuator comprises an enclosure 11, or case, which encloses the conversion devices that convert the rectilinear motion of the actuators into a rotary motion to be transmitted to the drive shaft of a valve (not shown in the figure).

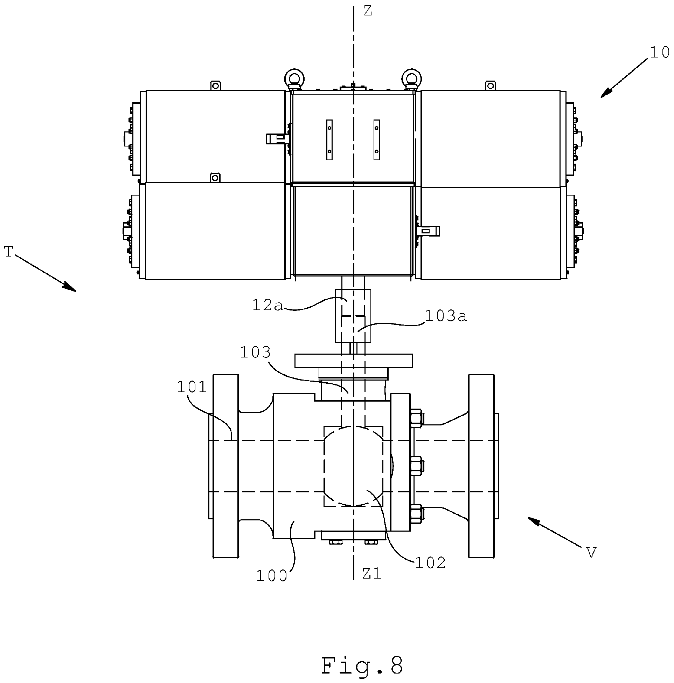

More in detail, a shaft 12 is accommodated within the case having one end 12a which can be connected to or keyed on the drive shaft of a valve (fig. 8). Said shaft 12 is rotatable into enclosure 11 about an axis of rotation Z coinciding with the axis of rotation of the drive shaft.

Shaft 12 may be solid, as in the example in the figure, or it may be at least partially hollow, for example in the shape of a sleeve, to accommodate part of the drive shaft of the valve.

At least a first conversion device, indicated as a whole with reference numeral 13 and at least a second conversion device, indicated as a whole with reference numeral 14, are integrally connected with shaft 12. The conversion devices may, however, be more than two, for example three or more.

In a preferred variant, such conversion devices comprise an oscillating yoke. More preferably, said devices comprise a double oscillating yoke. Such a device is per se well known to the man skilled in the art and will therefore not be described in more detail.

Preferably, the conversion devices are of the same type, for example they are all double oscillating yokes or single oscillating yokes. In the embodiment shown, the actuator is provided with two double oscillating yokes.

The feature of the invention is to provide the conversion devices arranged consecutively superimposed along the axis of rotation Z of the sleeve.

This configuration, as already mentioned, allows providing the actuator with four or more thrust devices and, therefore, reducing the size, and in particular the length, of each of them.

The actuator thus configured is able to provide high torque for opening or closing the valve while having limited axial dimensions.

According to the invention, each conversion device is connected to at least one thrust device configured to exert a force along a rectilinear direction.

In the variant shown, a first thrust device 15, which acts along a direction X1 in a first plane P1, is connected to a first oscillating yoke 13 and a second thrust device 16, which acts along a direction X2 in the second plane P2, is connected to a second oscillating yoke 14. Said planes P1 and P2 are parallel and offset with respect to the axis of rotation Z of shaft 12. Therefore, for each conversion device with which the actuator is provided, as many planes are identifiable, mutually offset along the axis of rotation Z, on which the translation directions of the thrust devices lie.

According to a preferred variant of the invention, the actuator further comprises a third thrust device 17, which acts along a direction X3 in plane P1, and a fourth thrust device 18, which acts along a direction X4 in the second plane P2. The third and the fourth thrust device are connected to the first oscillating yoke 13 and to the second oscillating yoke 14, respectively.

In a possible preferred variant, the thrust devices comprise a cylinder C, either hydraulic or pneumatic, and an elastic return element E, such as a spring or the like. The spring arrangement is such as to contrast the thrust exerted.

The thrust devices are connected to the respective conversion devices in such a way that the thrusts exerted by all the cylinders contribute to generate a concordant torque on shaft 12. Likewise, the forces exerted by springs E generate a concordant torque opposite to that generated by the cylinders.

Preferably, cylinder C and spring E are enclosed in a tubular housing I fixed to enclosure 11 of the actuator.

According to the invention, other types of thrust devices are equally usable, such as simple, double-acting cylinders, spring-loaded cartridges or the like.

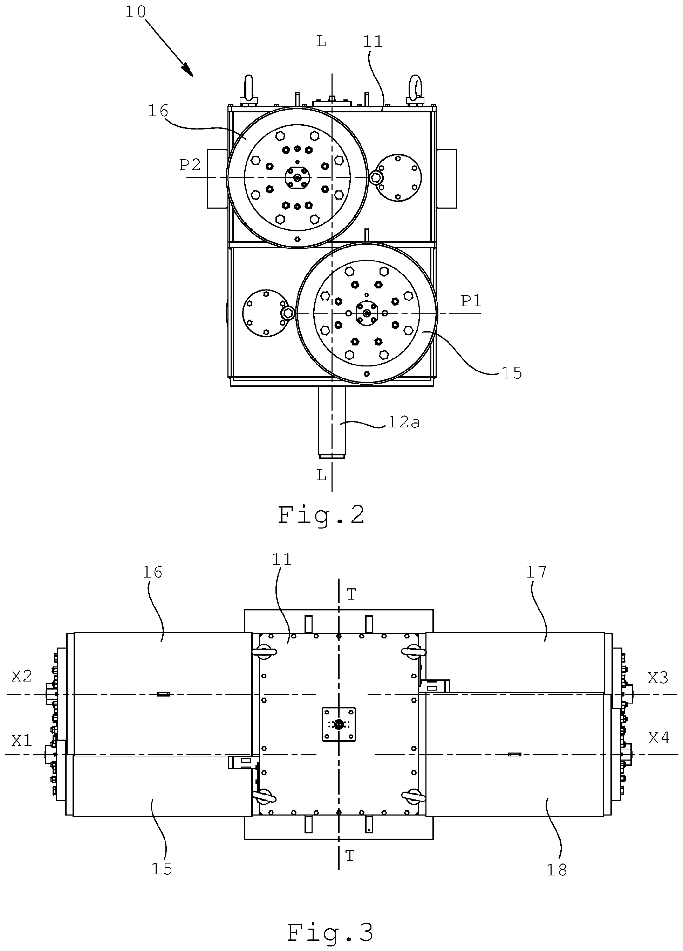

To also reduce the transverse and height dimensions of the actuator, the thrust devices arranged on adjacent planes are connected to the opposite sides of the respective oscillating yoke. In practice, observing the actuator sideways, as in figure 2, the thrust devices are offset with respect to a vertical plane L which passes by the axis of rotation Z.

In this way, for example, it is possible to increase the diameter of the actuator cylinders without these protruding laterally and in height from the outline of enclosure 11.

According to another variant of the invention, not shown, shaft 12 may comprise one or more modular portions. In this way, for example, it is possible to provide a modular component which comprises a portion of a shaft and a relative conversion device, which can be joined to other identical ones as a function of the number of work planes of the actuator.

Shaft 12 may further comprise multiple sections having a decreasing size starting from the end closest to the valve drive shaft. According to this variant, a conversion device is connected at each section of the shaft. In this way, each section may be properly sized to withstand the strains generated by the thrust elements on the corresponding plane and those on more distant planes with respect to the valve.

This configuration allows limiting both the weight and the manufacturing cost of the shaft which, if has a constant section, would exhibit oversized areas with respect to the actual strain applied. This solution is applicable both to a shaft made in one piece and to a shaft comprising multiple mutually joined portions.

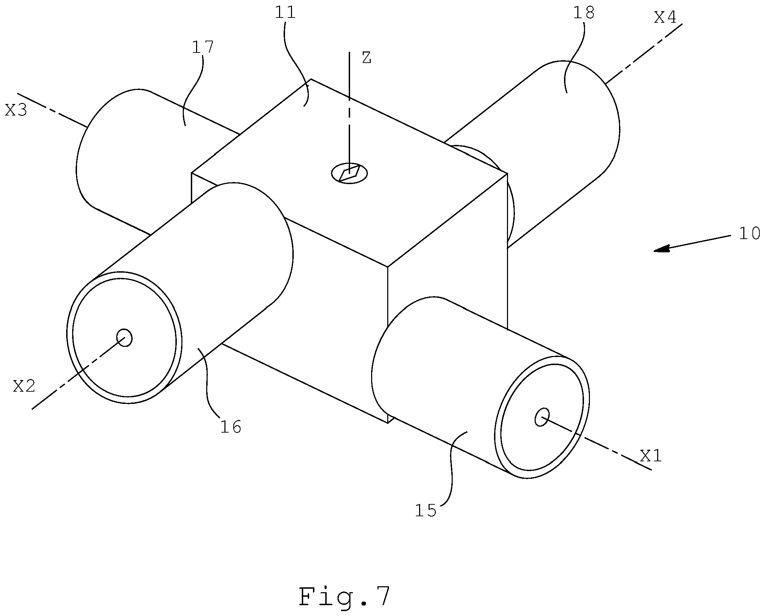

Figure 7 shows another variant of the actuator according to the invention. In this case, the thrust devices placed on adjacent planes may be arranged so that their directions of action are transverse to each other, and more precisely perpendicular.

In this case, the various conversion devices, for example the yoke devices, can be connected to the sleeve with an angular offset equal to the angle between the axis of movement of the actuator cylinders.

Figure 8 shows the actuator according to the invention applied to a valve V to form a shut-off device T. Valve V is shown by way of non-limiting example with respect to the possibility of application of the actuator of the invention.

Valve V comprises a tubular body 100 in which a passage 101 for a fluid is defined. A shutter 102 is accommodated in said passage and is rotatable about an axis Z1, coinciding with axis Z of the actuator shaft to allow or prevent the passage of fluid. The rotation of the shutter is carried out through the drive shaft 103, integral in rotation with said shutter 103, which has a connection portion 103a couplable with shaft 12 of the actuator.

The invention has been described for illustration and non-limiting purpose, according to some preferred embodiments. The man skilled in the art will be able to find several other embodiments and variants thereof, all falling within the scope of protection of the following claims.

## Claims

1. Valve control actuator, couplable with a valve, comprising:
- a shaft (12), rotatable about an axis of rotation (Z), having an end couplable with a drive shaft (103) of a valve;
- a first thrust device (15) acting along a direction (X1) in a first plane (P1) perpendicular to the axis (Z);
- a first conversion device (13), connected to the shaft (12) adapted to convert the rectilinear motion of the first thrust device into a rotary motion of the shaft (12) about the axis (Z);
- at least a second thrust device (16) acting along a direction (X2) in a second plane (P2) perpendicular to the axis (Z); and
- at least a second conversion device (14), connected to the shaft (12) adapted to convert the rectilinear motion of the second thrust device into a rotary motion of the shaft (12) about the axis (Z);
wherein said conversion devices (13, 14) are arranged mutually overlapping and consecutive along the axis (Z) and comprise a single or double oscillating yoke, and wherein said thrust devices (15, 16) comprise pneumatic or hydraulic cylinders, or said cylinders coupled to elastic return elements or are only elastic return elements.

2. Valve actuator, according to claim 1, **characterized in that** the directions of action (X1, X2) of the first thrust device (15) and of the second thrust device (16) are parallel to each other.

3. Valve actuator, according to claim 1, **characterized in that** directions of action (X1, X2) of the first thrust device (15) and of the second thrust device (16) are perpendicular to each other.

4. Valve actuator, according to any one of the preceding claims, **characterized in that** it comprises a third thrust device (17), connected to the first conversion device (13), acting along a direction (X3) in the first plane (P1), and a fourth thrust device (18), connected to the second conversion device (14), acting along a direction (X4) in the second plane (P2).

5. Valve actuator, according to claim 4, **characterized in that** the thrust devices acting on directions lying on the same plane are connected to the opposite sides of the respective double oscillating yoke.

6. Valve actuator, according to any one of the preceding claims, **characterized in that** the shaft (12) has a cylindrical profile and comprises sections of different diameter at each conversion device, said diameter decreasing from the section closest to the drive shaft (103) of the valve.

7. Valve actuator, according to any one of the preceding claims, **characterized in that** the shaft (12) comprises multiple portions joined together, each portion being connected to a conversion device (13, 14).

8. Valve actuator, according to any one of the preceding claims, **characterized in that** it comprises further thrust devices, acting on planes parallel and consecutive to the first plane (P1) and to the second plane (P2), connected to the respective mutually overlapped conversion devices.

9. Valve actuator, according to any one of the preceding claims, **characterized in that** it comprises an enclosure (11) which encloses at least part of said shaft (12) and the conversion devices (13, 14).

10. Valve actuator, according to claim 9, **characterized in that** said thrust devices (15, 16, 17, 18) are attached to the side wall of said enclosure (11).

11. Shut-off device, which includes:
- a valve comprising a tubular body (100), in which a passage (101) for a fluid is defined, a shutter (102) placed in said passage and rotatable about an axis of rotation (Z1) to open and close said passage (101) for the fluid and a drive shaft (103) integral in rotation with the shutter (102); and
- a valve control actuator, according to any one of the preceding claims, connected to the drive shaft (103) of said valve.

## Patentansprüche

1. Ventilstellantrieb, kuppelbar mit einem Ventil, umfassend:
- eine um eine Rotationsachse (Z) drehbare Welle (12), die ein Ende aufweist, das mit einer Antriebswelle (103) eines Ventils kuppelbar ist;
- eine erste Schubvorrichtung (15), die längs einer Richtung (X1) auf eine erste Ebene (P1), senkrecht zur Achse (Z), einwirkt;
- eine erste Umwandlungsvorrichtung (13), die mit der Welle (12) verbunden ist, geeignet, um die geradlinige Bewegung der ersten Schubvorrichtung in eine Drehbewegung der Welle (12) um die Achse (Z) umzuwandeln;
- mindestens eine zweite Schubvorrichtung (16), die entlang einer Richtung (X2) auf eine zweite Ebene (P2), senkrecht zur Achse (Z), einwirkt; und
- mindestens eine zweite Umwandlungsvorrichtung (14), die mit der Welle (12) verbunden ist, geeignet, um die geradlinige Bewegung der zweiten Schubvorrichtung in eine Drehbewegung der Welle (12) um die Achse (Z) umzuwandeln;
wobei besagte Umwandlungsvorrichtungen (13, 14) gegenseitig überlappend und aufeinanderfolgend längs der Achse (Z) angeordnet sind und eine einfache oder doppelte Schwinggabel umfassen, und wobei besagte Schubvorrichtungen (15, 16) pneumatische oder hydraulische Zylinder umfassen, oder besagte Zylinder sind mit elastischen Rückstellelementen verbunden oder sind nur elastische Rückstellelemente.

2. Ventilantrieb, gemäß Anspruch 1, **dadurch gekennzeichnet, dass** die Einwirkungsrichtungen (X1, X2) der ersten Schubvorrichtung (15) und der zweiten Schubvorrichtung (16) parallel zueinander sind.

3. Ventilantrieb, gemäß Anspruch 1, **dadurch gekennzeichnet, dass** die Einwirkungsrichtungen (X1, X2) der ersten Schubvorrichtung und der zweiten Schubvorrichtung (16) senkrecht zueinander sind.

4. Ventilantrieb, gemäß einem jeden der vorhergehenden Ansprüche, **dadurch gekennzeichnet, dass** er eine dritte Schubvorrichtung (17) umfasst, die mit der ersten Umwandlungsvorrichtung (13) verbunden ist und längs einer Richtung (X3) auf die erste Ebene (P1) einwirkt, und eine vierte Schubvorrichtung (18), die mit der zweiten Umwandlungsvorrichtung (14) verbunden ist und längs einer Richtung (X4) auf die zweite Ebene (P2) einwirkt.

5. Ventilantrieb, gemäß Anspruch 4, **dadurch gekennzeichnet, dass** die Schubvorrichtungen, die auf Richtungen einwirken, die auf der gleichen Ebene liegen, mit den gegenüberliegenden Seiten der entsprechenden doppelten Schwinggabel verbunden sind.

6. Ventilantrieb, gemäß einem jeden der vorhergehenden Ansprüche, **dadurch gekennzeichnet, dass** die Welle (12) ein zylinderförmiges Profil aufweist und Teile mit unterschiedlichem Durchmesser an jeder Umwandlungsvorrichtung umfasst, wobei besagter Durchmesser ab dem Teil, der der Antriebswelle (103) des Ventils am nächsten liegt, abnimmt.

7. Ventilantrieb, gemäß einem jeden der vorhergehenden Ansprüche, **dadurch gekennzeichnet, dass** die Welle (12) mehrere miteinander verbundene Abschnitte umfasst, wobei jeder Abschnitt mit einer Umwandlungsvorrichtung (13, 14) verbunden ist.

8. Ventilantrieb, gemäß einem jeden der vorhergehenden Ansprüche, **dadurch gekennzeichnet, dass** er weitere Schubvorrichtungen umfasst, die auf Ebenen parallel und aufeinanderfolgend auf die erste Ebene (P1) und auf die zweite Ebene (P2) einwirken und mit den entsprechenden gegenseitig überlappenden Umwandlungsvorrichtungen verbunden sind.

9. Ventilantrieb, gemäß einem jeden der vorhergehenden Ansprüche, **dadurch gekennzeichnet, dass** er ein Gehäuse (11) umfasst, das mindestens einen Teil der besagten Welle (12) und die Umwandlungsvorrichtungen (13, 14) umfasst.

10. Ventilantrieb, gemäß Anspruch 9 **dadurch gekennzeichnet, dass** besagte Schubvorrichtungen (15, 16, 17, 18) an der Seitenwand des besagten Gehäuses (11) befestigt sind.

11. Absperrvorrichtung, die umfasst:
- ein Ventil, umfassend einen schlauchförmigen Körper(100), in dem ein Durchgang (101) für ein Fluid definiert ist, einen Verschluss (102), der in dem besagten Durchgang platziert und um eine Rotationsachse (Z1) drehbar ist, um besagten Durchgang (101) für das Fluid zu öffnen und zu schließen, und eine Antriebswelle (103), die in Rotation mit dem Verschluss (102) fest verbunden ist; und
- ein Ventilstellantrieb, gemäß einem jeden der vorhergehenden Ansprüche, verbunden mit der Antriebswelle (103) des besagten Ventils.

## Revendications

1. Actionneur de commande de vanne, pouvant être couplé à une vanne, comprenant :
- un arbre (12) pouvant tourner autour d'un axe de rotation (Z), ayant une extrémité pouvant être couplée à un arbre d'entraînement (103) d'une vanne ;
- un premier dispositif de poussée (15) agissant le long d'une direction (X1) dans un premier plan (P1) perpendiculaire à l'axe (Z) ;
- un premier dispositif de conversion (13), connecté à l'arbre (12) adapté pour convertir le mouvement rectiligne du premier dispositif de poussée en un mouvement de rotation de l'arbre (12) autour de l'axe (Z) ;
- au moins un deuxième dispositif de poussée (16) agissant le long d'une direction (X2) dans un deuxième plan (P2) perpendiculaire à l'axe (Z) ; et
au moins un deuxième dispositif de conversion (14), connecté à l'arbre (12) adapté pour convertir le mouvement rectiligne du deuxième dispositif de poussée en un mouvement de rotation de l'arbre (12) autour de l'axe (Z) ;
où lesdits dispositifs de conversion (13, 14) sont agencés de manière à se chevaucher mutuellement et se suivent le long de l'axe (Z) et comprennent une culasse oscillante simple ou double, et où lesdits dispositifs de poussée (15, 16) comprennent des cylindres pneumatiques ou hydrauliques, ou lesdits cylindres couplés à des éléments de retour élastiques ou sont uniquement des éléments de retour élastiques.

2. Actionneur de vanne selon la revendication 1, **caractérisé par le fait que** les directions d'action (X1, X2) du premier dispositif de poussée (15) et du deuxième dispositif de poussée (16) sont parallèles entre elles.

3. Actionneur de vanne selon la revendication 1, **caractérisé par le fait que** les directions d'action (X1, X2) du premier dispositif de poussée (15) et du deuxième dispositif de poussée (16) sont perpendiculaires entre elles.

4. Actionneur de vanne selon l'une des revendications précédentes, **caractérisé par le fait qu'**il comprend un troisième dispositif de poussée (17), connecté au premier dispositif de conversion (13), agissant le long d'une direction (X3) dans le premier plan (P1), et un quatrième dispositif de poussée (18), connecté au deuxième dispositif de conversion (14), agissant le long d'une direction (X4) dans le deuxième plan (P2).

5. Actionneur de vanne selon la revendication 4, **caractérisé par le fait que** les dispositifs de poussée agissant dans des directions situées dans le même plan sont reliés aux côtés opposés de la culasse à double oscillation respective.

6. Actionneur de vanne selon l'une des revendications précédentes, **caractérisé par le fait que** l'arbre (12) possède un profil cylindrique et comprend des sections de diamètre différent au niveau de chaque dispositif de conversion, ledit diamètre diminuant à partir de la section la plus proche de l'arbre d'entraînement (103) de la vanne.

7. Actionneur de vanne selon l'une des revendications précédentes, **caractérisé par le fait que** l'arbre (12) comprend plusieurs portions jointes ensemble, chaque portion étant connectée à un dispositif de conversion (13, 14).

8. Actionneur de vanne selon l'une des revendications précédentes, **caractérisé par le fait qu'**il comprend d'autres dispositifs de poussée, agissant sur des plans parallèles et consécutifs au premier plan (P1) et au deuxième plan (P2), connectés aux dispositifs de conversion respectifs se chevauchant.

9. Actionneur de vanne selon l'une des revendications précédentes, **caractérisé par le fait qu'**il comprend une enceinte (11) qui renferme au moins une partie dudit arbre (12) et des dispositifs de conversion (13, 14).

10. Actionneur de vanne selon la revendication 9, **caractérisé par le fait que** lesdits dispositifs de poussée (15, 16, 17, 18) sont raccordés à la paroi latérale de ladite enceinte (11).

11. Dispositif d'arrêt, qui inclut :
- une vanne comprenant un corps tubulaire (100) dans lequel est défini un passage (101) pour un fluide, un obturateur (102) placé dans ledit passage et pouvant tourner autour d'un axe de rotation (Z1) pour ouvrir et fermer ledit passage (101) pour le fluide et un arbre d'entraînement (103) solidaire en rotation avec l'obturateur (102) ; et
- un actionneur de commande de vanne selon l'une des revendications précédentes, connecté à l'arbre d'entraînement (103) de ladite vanne.
